# EUROPEAN PATENT APPLICATION

(11) **EP 1 983 438 A1**
(43) Date of publication of application: **22.10.2008**
(21) Application number: 06712819.9
(22) Date of filing: 01.02.2006
(51) Int. Cl.: G06F 11/34, G06F 11/30

(54) **FAILURE INFORMATION MANAGEMENT METHOD, DETECTION METHOD AND APPARATUS, AND STORAGE MEDIUM**

(71) Applicant: FUJITSU LIMITED, Kawasaki-shi, Kanagawa 211-8588 (JP)
(72) Inventor: YUUKI, Kazuhiro, Kawasaki-shi, Kanagawa 2118588 (JP); OKANO, Kenji, Kawasaki-shi, Kanagawa 2118588 (JP); KOINUMA, Hideyuki, Kawasaki-shi, Kanagawa 2118588 (JP); KOREKATA, Kenji, Kawasaki-shi, Kanagawa 2118588 (JP); WATANABE, Hiroyuki, Kawasaki-shi, Kanagawa 2118588 (JP)
(74) Representative: Holtby, Christopher Lawrence
(86) International application number: PCT/JP2006/301676
(87) International publication number: WO 2007/088606

(57) **Abstract**

A failure information management method manages failure information related to a replaceable part of an electronic apparatus, by generating an error log having a representative log information part that includes identification information of a replacement recommended part which is recommended to be replaced by an analyzing process which analyzes a failure generated in a part and a type of the failure, and detailed log information part that includes device environment information of the replacement recommended part at a time when the failure is generated, and storing the error log in a non-volatile memory of the replacement recommended part itself. The error log is generated by recording first generation information in the representative log information part and the detailed log information part in a non-overwritable manner with respect to a first failure of the replacement recommended part, and by recording second generation information in the representative log information part and the detailed log information part in an overwritable manner with respect to second and subsequent failures of the replacement recommended part.

## Description

### TECHNICAL FIELD

The present invention generally relates to failure information management methods and apparatuses, failure detection methods and apparatuses, electronic apparatuses, information processing apparatuses and computer-readable storage media, and more particularly to failure information management method and apparatus for managing failure information of parts of an electronic apparatus, failure detection method and apparatus for detecting a failure of the electronic apparatus, and a computer-readable storage medium which stores a program for causing a computer to make a failure information management and/or a failure detection. The present invention also more particularly relates to an electronic apparatus and an information processing apparatus provided with such a failure information management apparatus and/or a failure detection apparatus, and a program itself for causing the computer to make the failure information management and/or the failure detection.

### BACKGROUND ART

Electronic apparatuses, such as computer systems, telephone sets, facsimile apparatuses and copying apparatuses, are provided with replaceable parts. A non-volatile memory of such a part stores information unique to the part, such as a serial number, and sometimes also stores information customized by a user or according to a setup environment of the electronic apparatus, log information and the like.

An example will be described by referring to a computer system that is provided with a plurality of boards. When a failure is detected in the computer system, the failure is analyzed to judge the board and the parts on the board which require maintenance. The board or the part on the board which is judged as requiring the maintenance is replaced by a normal board or part (hereinafter referred to as a maintenance board or part), and the failed board or part on the board, which is removed from the computer system, is sent to a repair factory and repaired to be reused.

In order to accurately repair the failed board or part at the repair factory in a short time, it is necessary to know the failure information, such as error information, that is detected when the failure is detected in the computer system. For this reason, when sending the failed board or part to the repair factory, it is necessary to notify the failure information to the repair factory by sending thereto a description or the like that is written with the failure information.

In the case of the board provided with a non-volatile memory, the log information of the failure may be stored in the non-volatile memory, and this log information may be read from the non-volatile memory at the repair factory to find out the failure information to a certain extent. However, the log information of the failure only indicates the kind of error or the like, and does not indicate in detail the situation in which the error occurred in the computer system. For this reason, when sending the failed board or part to the repair factory, it is necessary to notify the detailed information to the repair factory by sending thereto a description or the like that is written with the failure information in more detail.

In other words, the errors generated in the computer system include errors caused by the setup environment in which the computer system is set up, and errors caused by the setting of each part (that is, the device environment) within the computer system. Consequently, in order to repair the failed board or part at the repair factory, it is necessary to know the setup environment or the device environment of the computer system at the time when the error was generated due to the failed board or part, and the description or the like that is written with the failure information in mode detail is essential for the repair.

Patent Documents 1 and 2 propose an information processing apparatus having a module which is provided with a non-volatile storage means for storing the failure information. A Patent Document 3 proposes an automatic vending machine control apparatus having a terminal controller which is provided with a non-volatile storage means for storing the failure information. A Patent Document 4 proposes an electronic equipment having a function of notifying a time for replacing a consumable part to a manufacturer.
Patent Document 1: Japanese Laid-Open Patent Application No.3-58245
Patent Document 2: Japanese Laid-Open Patent Application No.2002-108655
Patent Document 3: Japanese Laid-Open Patent Application No.2001-101492
Patent Document 4: Japanese Laid-Open Patent Application No.6-267258

### DISCLOSURE OF THE INVENTION

### PROBLEMS TO BE SOLVED BY THE INVENTION

However, the description or the like that is written with the failure information in detail is normally created by a maintenance person who maintains the computer system. For this reason, the maintenance person may forget to write important failure information in the description or, if the maintenance person is not skilled, the unskilled maintenance person may not be able to write accurate failure information in the description. Accordingly, it may not be possible to make an appropriate repair or, the repair may take a long time, if the description or the like that is used when repairing the failed board or part at the repair factory is incomplete.

It is conceivable to make the computer system output information which is to be written in the description or the like that is written with the failure information in detail. But if the maintenance person is not skilled, it may not be possible to make the computer system output the appropriate failure information. Furthermore, if the maintenance person forgets an operation which is to be made with respect to the computer system, the description or the like related to the failed board or part will not be notified to the repair factory.

Therefore, the details of the failure information related to the failed board or part is in many cases dependent on the maintenance person. For this reason, it is conventionally difficult to positively notify the detailed failure information to the repair factory, and there was a problem in that the repair factory may not be able to appropriately repair the failed board or part or, the repair may take a long time.

Accordingly, it is a general object of the present invention to provide a novel and useful failure information management method and apparatus, failure detection method and apparatus, electronic apparatus, information processing apparatus and computer-readable storage medium, which can accurately and positively notify details of failure information related to a failed board or part.

### MEANS OF SOLVING THE PROBLEMS

The object described above may be realized by a failure information management method for managing failure information related to a replaceable part of an electronic apparatus, comprising a generating step generating an error log having a representative log information part and a detailed log information part, said representative log information part including identification information of a replacement recommended part which is recommended to be replaced by an analyzing process that analyzes a failure generated in a part and a type of the failure, said detailed log information part including device environment information of the replacement recommended part at a time when the failure is generated; and a storing step storing the error log in a non-volatile memory of the replacement recommended part itself, said generating step generating the error log by recording first generation information in the representative log information part and the detailed log information part in a non-overwritable manner with respect to a first failure of the replacement recommended part, and by recording second generation information in the representative log information part and the detailed log information part in an overwritable manner with respect to second and subsequent failures of the replacement recommended part.

The object described above may be realized by a failure detection method for detecting a failure of a replaceable part whose failure information is managed by the failure information management method described above, comprising deleting the failure mark within the non-volatile memory of a first replacement recommended part when replacing a second replacement recommended part if the failure mark is recorded, as the part state information, in the non-volatile memory of each of the first and second replacement recommended parts; and recording the failure mark again, as the part state information, in the non-volatile memory of the first replacement recommended part by detecting a failure of the first replacement recommended part if a failure is generated again after replacement of the second replacement recommended part.

The object described above may be realized by a computer-readable storage medium storing a program which causes a computer to execute procedures to manage the failure information related to a replaceable part of the electronic apparatus, according to the failure information management method described above.

The object described above may be realized by a computer-readable storage medium storing a program which causes a computer to execute procedures to detect the failure of a replaceable part whose failure information is managed, according to the failure detection described above.

The object described above may be realized by a failure information management apparatus comprising analyzing means for carrying out an analyzing process to analyze a failure generated in a part of an electronic apparatus; generating means for generating an error log having a representative log information part and a detailed log information part, said representative log information part including identification information of a replacement recommended part which is recommended to be replaced by the analyzing process and a type of the failure, said detailed log information part including device environment information of the replacement recommended part at a time when the failure is generated; and storing means for storing the error log in a non-volatile memory of the replacement recommended part itself, said generating means generating the error log by recording first generation information in the representative log information part and the detailed log information part in a non-overwritable manner with respect to a first failure of the replacement recommended part, and by recording second generation information in the representative log information part and the detailed log information part in an overwritable manner with respect to second and subsequent failures of the replacement recommended part.

The object described above may be realized by a failure detection apparatus for detecting a failure of a replaceable part whose failure information is managed by the failure information management method described above, comprising means for deleting the failure mark within the non-volatile memory of a first replacement recommended part when replacing a second replacement recommended part if the failure mark is recorded, as the part state information, in the non-volatile memory of each of the first and second replacement recommended parts; and means for recording the failure mark again, as the part state information, in the non-volatile memory of the first replacement recommended part by detecting a failure of the first replacement recommended part if a failure is generated again after replacement of the second replacement recommended part.

The failure detection apparatus may be provided in a part other than the replacement recommended part within the electronic apparatus.

The object described above may be realized by an electronic apparatus comprising at least one of the failure information management apparatus described above, and a failure detection apparatus described above.

The object described above may be realized by an information processing apparatus mounted with replaceable parts, characterized in that there are provided analyzing means for carrying out an analyzing process to analyze a failure generated in a part of the information processing apparatus; generating means for generating an error log including information identifying a replacement target part, information indicating a type of failure generated in the replacement target part, and information related to an operation environment of the replacement target part, based on the analyzing process of the analyzing means; storing means for storing the error log; and means for writing a first generation error log generated for a first failure of the replacement target part in a non-overwritable manner in the storing means, and for storing a second generation error log generated for second and subsequent failures of the replacement target part in an overwritable manner in the storing means.

The object described above may be realized by a failure information management method for managing failure information related to a failure generated in a part of an electronic apparatus, characterized in that there are provided a step generating an error log including information identifying a replacement target part, information indicating a type of failure generated in the replacement target part, and information related to an operation environment of the replacement target part, based on an analyzing process which analyzes a failure generated in the replacement target part; and writing a first generation error log related to a first failure of the replacement target part in a non-overwritable manner in a storage part, and storing a second generation error log related to second and subsequent failures of the replacement target part in an overwritable manner in the storage part.

### EFFECTS OF THE INVENTION

According to the present invention, it is possible to realize failure information management method and apparatus, failure detection method and apparatus, an electronic apparatus, an information processing apparatus and a computer-readable storage medium, which can accurately and positively notify details of failure information related to a failed board or part.

### BRIEF DESCRIPTION OF THE DRAWINGS

FIG. 1 is a block diagram showing an electronic apparatus which may be applied with the present invention;
FIG. 2 is a block diagram showing a process flow for a case where a CPU of a SCFU detects a failure within a computer system;
FIG. 3 is a flow chart for explaining a process for the case where the CPU of the SCFU detects the failure within the computer system;
FIG. 4 is a diagram showing an example of an error log;
FIG. 5 is a flow chart for explaining a computation process for computing power supply time information;
FIG. 6 is a flow chart for explaining a registration process for registering the power supply time information; and
FIG. 7 is a diagram for explaining a failure detection process by adding and deleting failure marks.

### DESCRIPTION OF THE REFERENCE NUMERALS

1 Computer System
11 BP
12 SCFU
13 IOU
14 CMU
15 Panel Board
16 Fan BP
17 PSU
18 FAN
122, 142 CPU
121, 131, 141, 401, 501 FRU-ROM

### BEST MODE OF CARRYING OUT THE INVENTION

A description will be given of each embodiment of failure information management method and apparatus, failure detection method and apparatus, an electronic apparatus, an information processing apparatus and a computer-readable storage medium according to the present invention, by referring to the drawings.

### EMBODIMENTS

First, a description will be given of a first embodiment of the present invention.

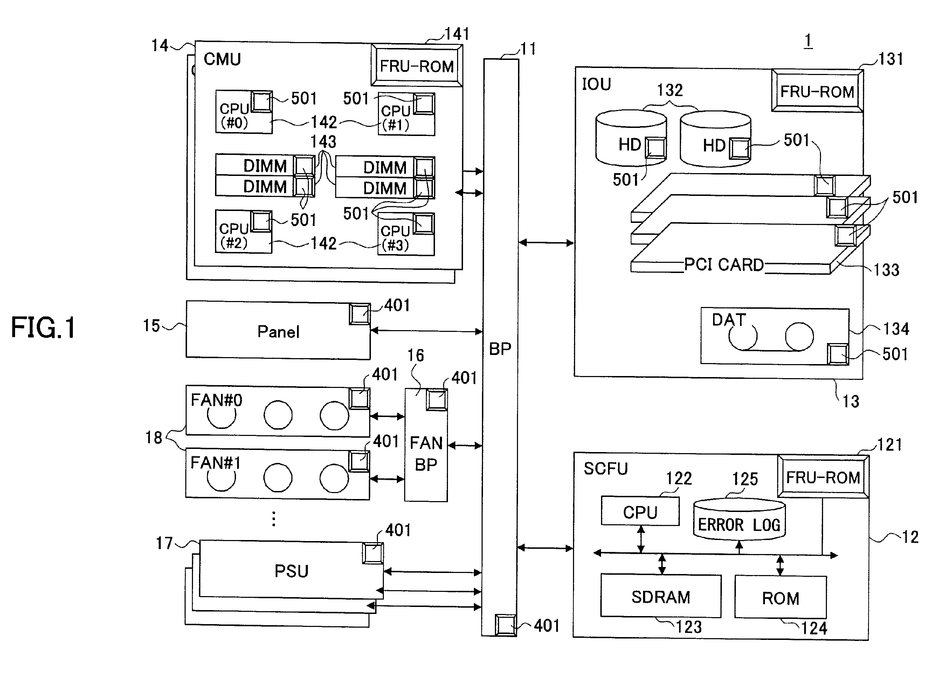

FIG. 1 is a block diagram showing an electronic apparatus which may be applied with the present invention. FIG. 1 shows a case where the present invention is applied to a computer system, which is an information processing apparatus.

A computer system 1 shown in FIG. 1 includes a System Control Facility Unit (SCFU) 12, an Input/Output controller Unit (IOU) 13, a plurality of CPU Memory board Units (CMUs) 14, a panel board (Panel) 15, a fan Back Panel (BP) 16, and a plurality of Power Supply Units (PSUs) 17 which are connected to a Back Panel (BP) 11. A plurality of fans 18 (FAN#0, FAN#1, ...) are connected to the fan BP 16. It is assumed for the sake of convenience that the BP 11, the SCFU 12, the IOU 13, the CMUs 14, the panel board 15, the fan BP 16, the PSUs 17 and the fans 18 are replaceable, and that each of these parts are formed by a board at least having a non-volatile memory. Because the replaceable board is often referred to as a Field Replace Unit (FRU), the non-volatile memory is indicated as a FRU-ROM in FIG. 1.

The SCFU 12 controls the entire computer system 1, and has a FRU-ROM 121, a CPU 122, a SDRAM 123, a ROM 124, and a storage part 125 such as a hard disk drive. The IOU 13 controls input to and output from the computer system 1, and has a FRU-ROM 131, a plurality of Hard Disk Drives (HDDs) 132, a plurality of PCI cards 133, and a DAT device 134. The CMU 14 has a FRU-ROM 141, 1 plurality of CPUs 142 (#0 through #3), and a plurality of Duel Inline Memory Modules (DIMMs) 143. The panel board 15 stores device setting information. Although a detailed description thereof will be omitted, each of the BP 11, the panel board 15, the fan BP 16, the PCU 17 and the fan 18 also has a FRU-ROM which is designated by the same reference numeral "401" for the sake of convenience. In addition, each of the replaceable elements, parts and devices on each of the boards 11 through 13 also has a FRU-ROM which is designated by the same reference numeral "501" for the sake of convenience. For example, each CPU 142 and each DIMM 143 within the CMU 14 has a DRU-ROM 501.

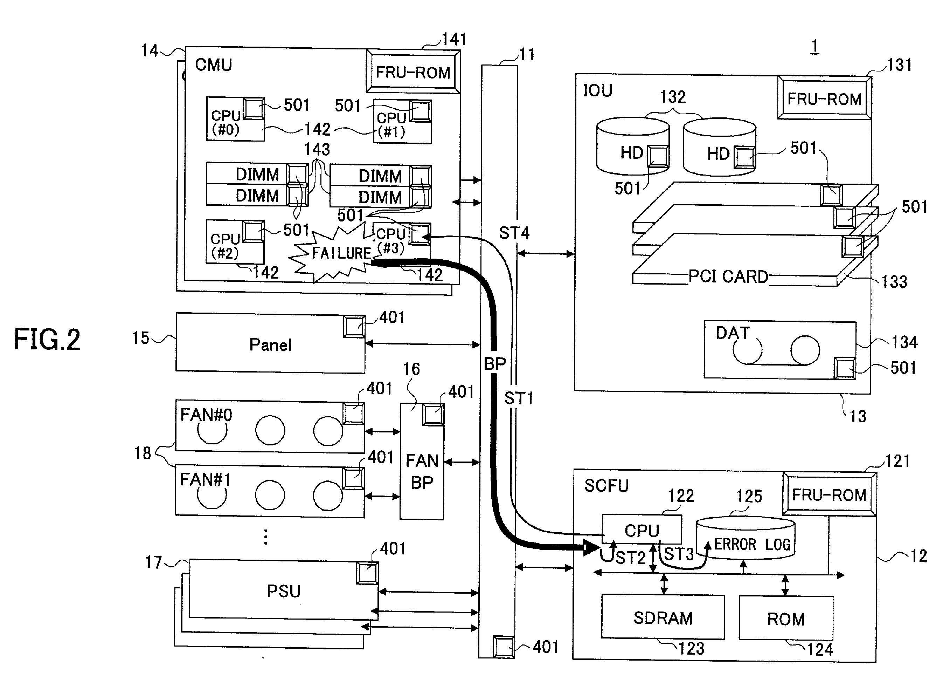

Next, a description will be given of an operation for a case where a failure is generated in the computer system 1, by referring to FIGS. 2 through 4.

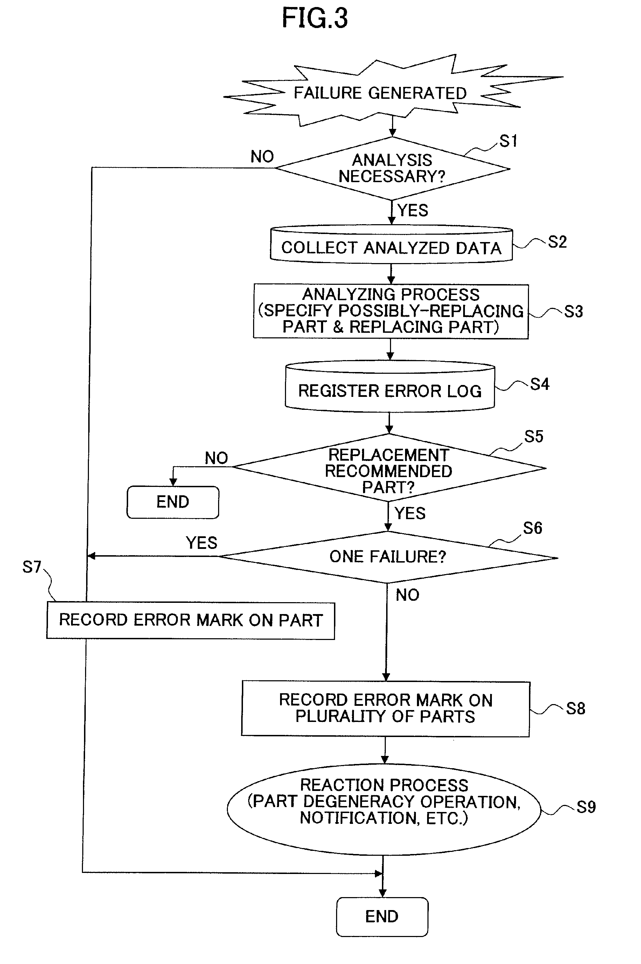

FIG. 2 is a block diagram showing a process flow for a case where the CPU 122 of the SCFU 12 detects a failure within the computer system 1. FIG. 3 is a flow chart for explaining a process for the case where the CPU 122 of the SCFU 12 detects the failure within the computer system 1. In FIG. 2, those parts that are the same as those corresponding parts in FIG. 1 are designated by the same reference numerals, and a description thereof will be omitted.

The process shown in FIG. 3 is executed by a processor that is provided in a part that excludes a replacing part which needs to be replaced and a possibly-replacing part which is judged as requiring replacement. In this embodiment, for the sake of convenience, a description will be given for a case where the CPU 122 of the SCFU 12 which controls the entire computer system 1 executes the process shown in FIG. 3.

The process shown in FIG. 3 is started by the CPU 122 when an error is generated by a failure generated within the computer system 1. For example, when a failure is generated in the CPU 142 within the CMU 14, failure information, such as error information, is notified from the CPU 142 to the CPU 122 within the SCFU 12. In a step S1, the CPU 122 decides whether or not an analysis of the failure information is necessary, and the process advances to a step S2 if the decision result is YES. In the step S2, the CPU 122 collects the failure information from the CPU 142 as indicated by ST1 in FIG. 2, and temporarily stores the collected failure information in the SDRAM 123 or the like. In a step S3, the CPU 122 analyzes the collected failure information, as indicated by ST2 in FIG. 2. By this analyzing process of the step S3, it is possible to determine a replacing part which needs to be replaced or a possibly-replacing part which is judged as requiring replacement. Each of the replacing part and the possibly-replacing part may be a replaceable board or, an element, a part or a device which is replaceably provided on the board.

In a step S4, the CPU 122 generates an error log based on the analyzing process, and registers the generated error log by storing the error log in the storage part 125, as indicated by ST3 in FIG. 2. The error log in this embodiment includes a representative log information part and a detailed log information part.

The representative log information part is recorded with part information indicating whether a replacement recommended part which is recommended to be replaced is a replacing part or a possibly-replacing part, identification (ID) number information of the replacement recommended part, type information indicating a type of the error or failure, time information indicating the date and time of the error generation, notification information indicating whether or not to notify the error or failure to a host device of the replacement recommended part, and the like. The type information indicates an error level which can display a plurality of levels from a minor error up to a serious error or, indicates a failure (or damage) level which can display a plurality of levels from a minor failure (or damage) up to a serious failure (or damage).

The detailed log information part is recorded with information related to a setup environment in which the computer system 1 is set up, and a setting of each replacement recommended part and/or a device environment, with respect to each replacement recommended part that is recorded in the representative log information part. The setup environment information includes information related to an operation state of the computer system 1, information indicating whether or not the environment is controlled to a constant humidity and a constant temperature condition, and the like. The information related to the operation state of the computer system 1 includes information indicating whether or not the computer system 1 operates continuously all day (or makes a non-stop operation), information indicating whether or not the computer system 1 operates at different times everyday, information indicating whether or not the computer system 1 operates only during the same time band everyday, and the like. The device environment information differs for each error or failure, but the setup environment information remains unchanged unless the configuration or the like of the computer system 1 is changed. For this reason, the setup environment information may be recorded in the representative log information part together with the device environment information or, recorded separately from the error log.

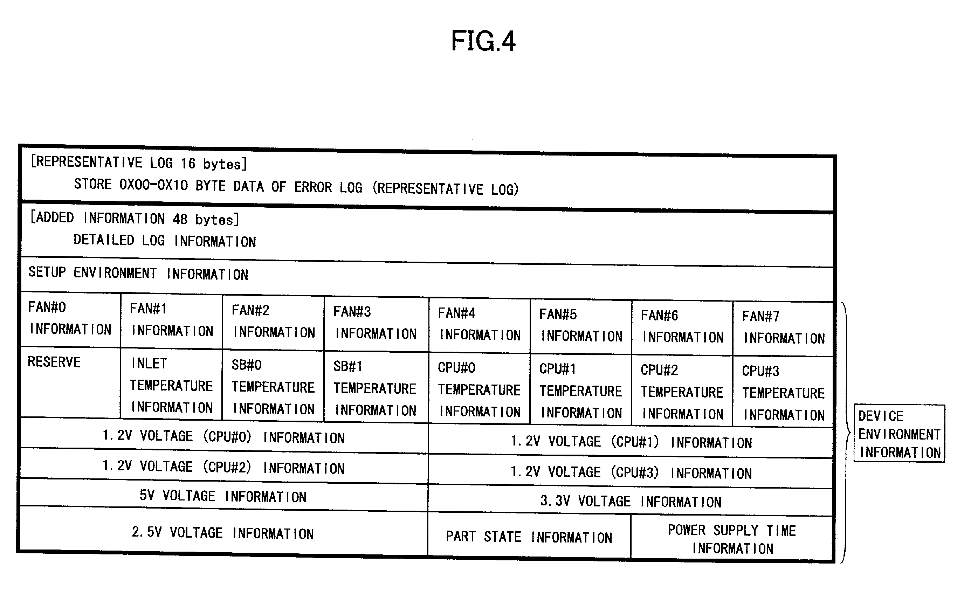

FIG. 4 is a diagram showing an example of the error log. FIG. 4 shows a case where the CPU 142 (#3) is the replacement recommended part which is recommended to be replaced and is recorded in the representative log information part. In FIG. 4, FAN#0 information through FAN#7 information indicate numbers of revolutions of the fans 18 within the computer system 1 when the above described failure is generated. Inlet temperature information indicates an inlet temperature of the computer system 1 when the above described failure is generated. SB#1 temperature information and SB#2 temperature information indicate the temperatures of the BP 11 within the computer system 1 when the above described failure is generated. CPU#0 temperature information through CPU#3 temperature information indicate the temperatures of the CPUs 142 within the CMU 14 when the above descried failure is generated. 1.2V voltage (CPU#0) information through 1.2V voltage (CPU#3) information indicate the state (or deviation) of the 1.2V voltage within the CPUs 142 (CPU#0 through CPU#3) within the CMU 14 when the above described failure is generated. 5V voltage information, 3.3V voltage information and 2.5V voltage information respectively indicate the state (or deviation) of the 5V power supply voltage, the 3.3V power supply voltage and the 2.5V power supply voltage that are supplied from the PSUs 17 when the above described failure is generated. Part state information indicates whether or not a failure mark (or error mark) indicating that the failure (or error) is added to the replacement recommended part which is recommended to be replaced and is recorded in the representative log information part. In other words, the part state information indicates whether or not the failure mark (or error mark) indicating the failure (or error) of the CPU 142 (CPU#3), which is the replacement recommended part, is recorded in the FRU-ROM 501 of the CPU 142 (CPU#3). Power supply time information indicates a power supply time for which the power is supplied to the replacement recommended part which is recommended to be replaced and is recorded in the representative log information part. In other words, the power supply time information indicates the power supply time for which the power is supplied to the CPU 142 (CPU#3). "Reserve" indicates a reserve information storage area.

In a step S5, the CPU 122 decides whether or not the replacement recommended part exists in the representative log information part, and the process ends if the decision result is NO. On the other hand, the process advances to a step S6 if the decision result in the step S5 is YES. In the step S6, the CPU 122 decides whether or not the total number of replacement recommended parts is one. The process advances to a step S7 if the total number of replacement recommended parts is one and the decision result in the step S6 is YES. In the step S7, the CPU 122 records, in the part state information of the detailed log information part, information indicating that the error mark is added with respect to the target replacement recommended part. In addition, the CPU 122 stores the error log related to the target replacement recommended part in the FRU-ROM 121 within the SCFU 12, and further stores the error log in the FRU-ROM 501 of the CPU 142 (CPU#3) within the CMU 14, as indicated by ST4 in FIG. 2. The process ends after the step S7.

In the description given above, it is assumed that the maintenance person can replace the CPU 142 (CPU#3) independently, and thus, the error log is stored in the CPU 142 (CPU#3). However, it is not essential to store the error log in the FRU-ROM 141 within the CMU 12 which does not become the replacement target part. Moreover, in a case where the maintenance person cannot replace the CPU 142 (CPU#3) independently and has to replace the entire CMU 14, it is desirable to also store the error log in the FRU-ROM 141 within the CMU 12. Therefore, it is preferable to store the error log for each part or device which becomes the replacement unit.

If the decision result in the step S6 is NO, it means that there exists a plurality of replacement recommended parts. Hence, in a step S8, the CPU 122 records, in the part stage information of the detailed log information part, information indicating that the error mark is added with respect to the plurality of target replacement recommended parts, and stores the error log in the FRU-ROM 121 within the SCFU 12. Furthermore, the CPU 122 also stores this error log in the FRU-ROM of each replacement recommended part, and if necessary, in the FRU-ROM of the part belonging to each replacement recommended part. In this case, the error log is stored in the FRU-ROM 501 of the CPU 142 (CPU#3) and the FRU-ROM 501 of the CPU 142 (CPU#2) within the CMU 14, for example, and if necessary, is also stored in the FRU-ROM 141 of the CMU 14 to which the CPU 142 (CPU#3) and the CPU 142 (CPU#2) belong. The decision result in the step S6 becomes NO in the case of an interface failure or the like, for example.

After the step S8, the process advances to a step S9. In the step S9, the CPU 122 carries out various reaction processes depending on the error or failure, and the process ends. The reaction processes include a maintenance operation (or information input or the like) which is to be carried out by the maintenance person with respect to the computer system 1 when performing a part degeneracy operation to actually remove the replacement recommended part which is recommended to be replaced from the computer system 1 and to actually replace the replacement recommended part, a notification which is made automatically to notify the replacement recommended part in which the error or failure is generated to the host device or the like based on the notification information recorded in the representative log information part of the error log, and a notification such as that described above which is made manually by the maintenance person to the host device or the like.

In the step S4, it is possible to record in each of the representative log information part and the detailed log information part first generation information which is recoded in the error log when the first error is generated, and second generation information which is recorded in the error log when the second and subsequent errors are generated. In this case, the error log is generated by recording the first generation information in the representative log information part and the detailed log information part in a non-overwritable manner for the first failure of the replacement recommended part, and recording the second generation information in the representative log information part and the detailed log information part in an overwritable manner for the second and subsequent failures (in this case, already registered failures) of the replacement recommended part. The first generation information related to the first failure is always stored in the FRU-ROM of the replacement recommended part, and the most recent second generation information is stored in the FRU-ROM of the replacement recommended part. Consequently, it is possible to easily make the appropriate repairs at the repair factory without having to be dependent upon the maintenance person.

In addition, when overwriting and recording the second generation information in the error log, it is possible to make the overwrite recording only if the error level or the failure level of the second generation information is higher than the error level or failure level of the information (which may include the first generation information) which is already recorded, that is, only if the error or failure of the second generation information is more series than the error or failure of the information which is already recorded. Accordingly, at the repair factory, it is possible to read, from the FRU-ROM of the replacement recommended part, information related to the more serious error or failure which requires the repair, without having to be dependent upon the maintenance person.

As will be described hereunder, with regard to the power supply time information, the first generation information and the second generation information are recorded using a method different from that used to record other information within the detailed log information part. This is to enable an appropriate repair, which takes into consideration the life and the like of the replacement recommended part, at the repair factory.

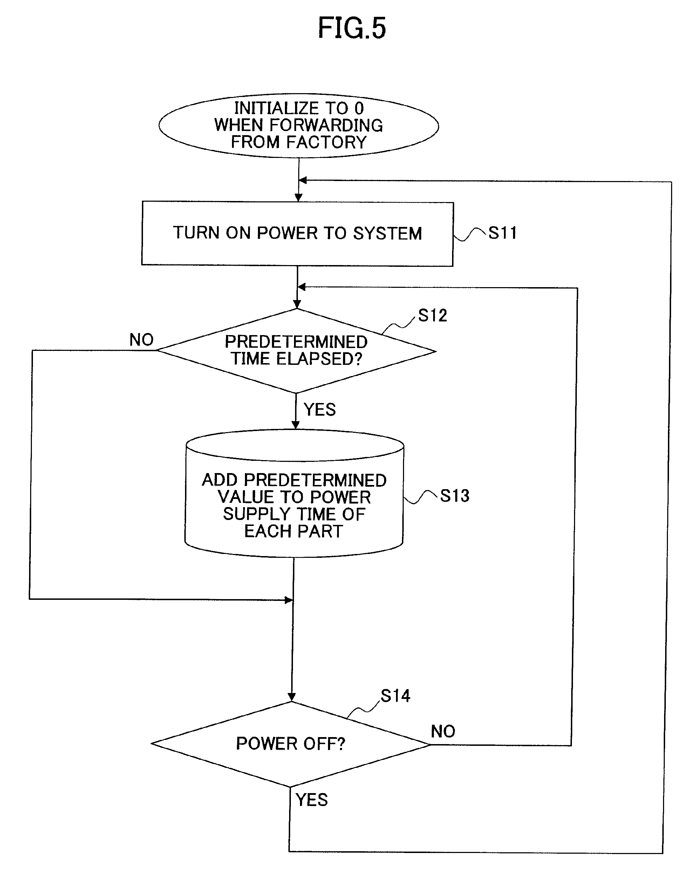

FIG. 5 is a flow chart for explaining a computation process for computing the power supply time information. The power supply time information of each part, such as the CMU 14, is initialized to 0 when each part is forwarded. A step S11 shown in FIG. 5 carries out a process of turning ON the power supply of the computer system 1 to which the each part, such as the CMU 14, is connected. A step S12 decides whether or not a predetermined time has elapsed from the time when the power supply is turned ON. The predetermined time is a unit of time with which the power supply time information is collected, and is one day, for example. If the decision result in the step S12 is YES, a step S13 adds a predetermined value to the power supply time information of each part, such as the CMU 14. If the predetermined time is one day, the step S13 adds 1 to the power supply time information, which is power supply day information in this case. If the decision result in the step S12 is NO or, after the step S13, a step S14 decides whether or not the power supply of the computer system 1 is turned OFF. The process returns to the step S12 if the decision result in the step S14 is NO. On the other hand, if the decision result in the step S14 is YES, the process returns to the step S11. Hence, the power supply time information of each part, such as the CMU 14, is periodically updated and stored in a memory such as the FRU-ROM within each part.

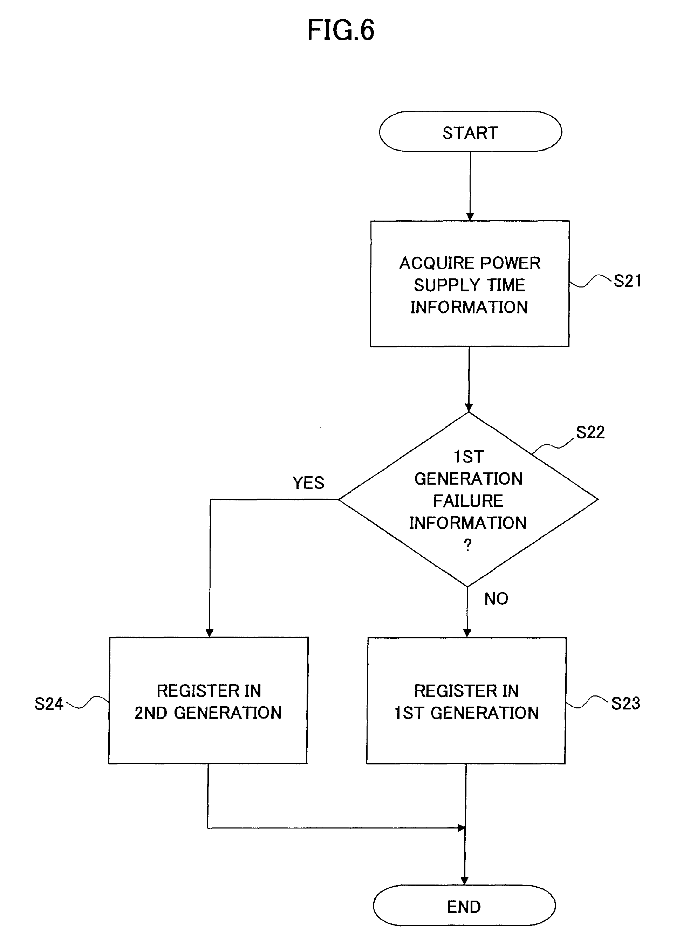

FIG. 6 is a flow chart for explaining a registration process for registering the power supply time information. The registration process shown in FIG. 6 for registering the power supply time information is carried out when recording the power supply time information in the error log in the step S4 shown in FIG. 3.

A step S21 shown in FIG. 6 carries out a process of acquiring the power supply time information of the replacement recommended part, such as the CMU 14, which is updated by the computation process shown in FIG. 5 for computing the power supply time information. A step S22 decides whether or not the first generation failure information exists. If the decision result in the step S22 is NO, a step S23 records the power supply time information of the replacement recommended part in the detailed log information part of the error log in a non-overwritable manner, as the first generation power supply time information, and the process ends. On the other hand, if the decision result in the step S22 is YES, a step S24 successively records the power supply time information of the replacement recommended part in the detailed log information part of the error log in an overwritable (or updatable) manner, as the second generation power supply time information, until the replacement recommended part is removed from the computer system 1, and the process ends.

Accordingly, in the step S4, the power supply time information at the time when the first generation information is recorded is recorded in the non-overwritable manner for the first failure, and for the second and subsequent failures, the power supply time information up to the time when the replacement recommended part is removed from the computer system 1 is successively recorded in the overwritable manner, so as to generate the error log.

Next, a description will be given of a second embodiment of the present invention.

In this embodiment, the present invention is also applied to the computer system shown in FIG. 1. This embodiment is characterized by the process of adding or deleting the failure mark (or error mark) which indicates the failure of the replacement recommended part, with respect to the part state information recorded in the representative log information part of the error log.

When the failure mark (or error mark) which indicates the failure of the replacement recommended part is added to the part state information recorded in the representative log information part of the error log, even if this replacement recommended part is removed from the computer system and connected to another computer system, it is possible to know from the failure mark (or error mark) that this replacement recommended part is a failed part. Hence, it is possible to positively prevent this replacement recommended part, which is a failed part, from being erroneously used in another computer system. In addition, by deleting the failure mark after repairing this failed part, it is possible to positively distinguish the repaired part which is normal and the failed part.

In other words, when the part is mounted on the device, the device refers to the error mark of the part, and if no mark is detected, the device judges that the part is a normal part (or usable part) and carries out a normal operation. On the other hand, if the device detects the error mark of the part, the device judges that the part is a failed part (or unusable part) and carries out a degeneracy operation with respect to this part.

However, in the case of the path-related or route-related failure that is generated between the parts, it is difficult to judge which one of the plurality of replacement recommended parts has actually failed. For this reason, if it is judged by the analyzing process of the step S3 shown in FIG. 3 that there are two replacement recommended parts, for example, this embodiment add the failure mark (or error mark) to the part state information of both the replacement recommended parts.

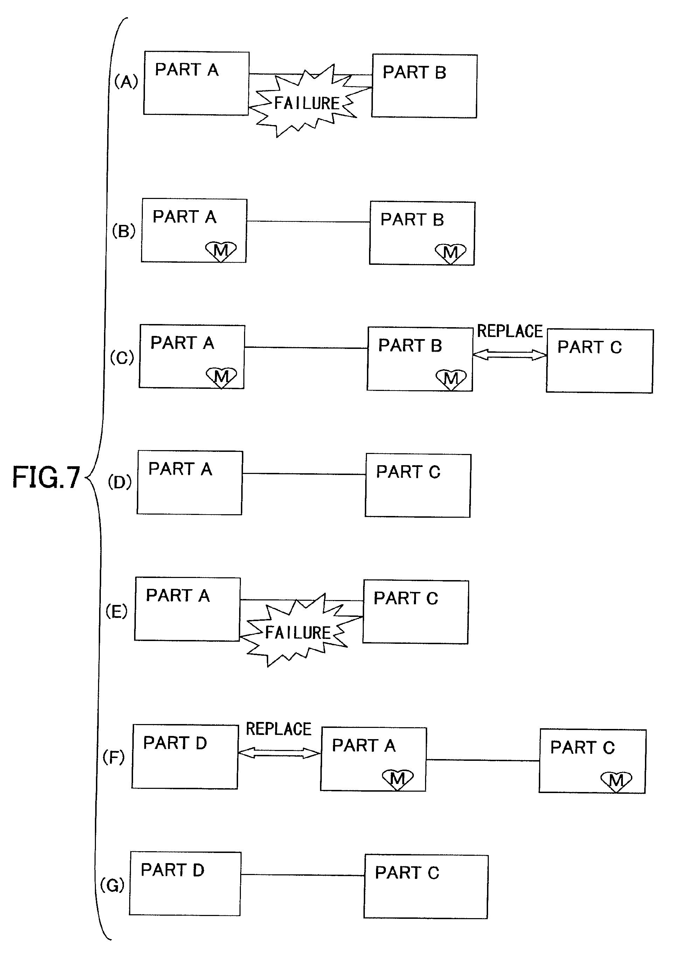

FIG. 7 is a diagram for explaining a failure detection process by adding and deleting failure marks M. As shown in FIG. 7(A), if the generation of the failure is detected by the analyzing process but it is not possible to judge which of two replacement recommended parts A and B has actually failed, the failure mark M is added to the part state information recorded in the representative log information part of both the replacement recommended parts A and B as shown in FIG. 7(B). Next, one replacement recommended part B is replaced by a normal part C as shown in FIG. 7(C), and the failure mark M added to the other replacement recommended part A is deleted as shown in FIG. 7(D). In this state, if the generation of the failure is again detected by the analyzing process as shown in FIG. 7(E), the replacement recommended part A is replaced by a normal part D, and a combination of the normal parts C and D is obtained as shown in FIG. 7(G). On the other hand, if no generation of the failure is detected in a state where one replacement recommended part B is replaced by the normal part C as shown in FIG. 7(C) and the failure mark M added to the other replacement recommended part A is deleted as shown in FIG. 7(D), the combination of the normal parts A and C is obtained.

Accordingly, even in the case of the path-related or route-related failure that is generated between the parts, it is possible to positively detect the failed part within a short time. In addition, by adding the failure mark M to the part which is detected as having the failure, it is possible to easily distinguish the failed parts from the normal parts.

### INDUSTRIAL APPLICABILITY

The present invention is applicable to electronic apparatuses formed by a part which is replaceable and is provided with a non-volatile memory, such as computer systems, information processing apparatuses, telephone sets, facsimile apparatuses and copying apparatuses.

Further, the present invention is not limited to these embodiments, but various variations and modifications may be made without departing from the scope of the present invention.

## Claims

1. A failure information management method for managing failure information related to a replaceable part of an electronic apparatus, comprising:
a generating step generating an error log having a representative log information part and a detailed log information part, said representative log information part including identification information of a replacement recommended part which is recommended to be replaced by an analyzing process that analyzes a failure generated in a part and a type of the failure, said detailed log information part including device environment information of the replacement recommended part at a time when the failure is generated; and
a storing step storing the error log in a non-volatile memory of the replacement recommended part itself,
said generating step generating the error log by recording first generation information in the representative log information part and the detailed log information part in a non-overwritable manner with respect to a first failure of the replacement recommended part, and by recording second generation information in the representative log information part and the detailed log information part in an overwritable manner with respect to second and subsequent failures of the replacement recommended part.

2. The failure information management method as claimed in claim 1, further comprising:
storing setup environment information indicating a setup environment of the electronic apparatus in the non-volatile memory of the replacement recommended part itself.

3. The failure information management method as claimed in claim 1, wherein
said device environment information includes time information indicating a power supply time for which power is supplied to the replacement recommended part; and
said generating step generates the error log by recording the time information at a time when the first generation information is recorded in a non-overwritable manner with respect to the first failure, and by successively recording the time information up to a time when the replacement recommended part is removed from the electronic apparatus in an overwritable manner with respect to the second and subsequent failures.

4. The failure information management method as claimed in claim 1, wherein said storing step also stores the error log in a non-volatile memory of a specific part which is replaceable if the replacement recommended part is mounted on the specific part.

5. The failure information management method as claimed in claim 1, wherein said device environment information includes, as part state information, a failure mark indicating that the replacement recommended part has failed.

6. A failure detection method for detecting a failure of a replaceable part whose failure information is managed by the failure information management method of claim 5, comprising:
deleting the failure mark within the non-volatile memory of a first replacement recommended part when replacing a second replacement recommended part if the failure mark is recorded, as the part state information, in the non-volatile memory of each of the first and second replacement recommended parts; and
recording the failure mark again, as the part state information, in the non-volatile memory of the first replacement recommended part by detecting a failure of the first replacement recommended part if a failure is generated again after replacement of the second replacement recommended part.

7. A computer-readable storage medium storing a program which causes a computer to execute procedures to manage the failure information related to a replaceable part of the electronic apparatus, according to the failure information management method of any of claims 1 to 5.

8. A computer-readable storage medium storing a program which causes a computer to execute procedures to detect the failure of a replaceable part whose failure information is managed, according to the failure detection method of claim 6.

9. A failure information management apparatus comprising:
analyzing means for carrying out an analyzing process to analyze a failure generated in a part of an electronic apparatus;
generating means for generating an error log having a representative log information part and a detailed log information part, said representative log information part including identification information of a replacement recommended part which is recommended to be replaced by the analyzing process and a type of the failure, said detailed log information part including device environment information of the replacement recommended part at a time when the failure is generated; and
storing means for storing the error log in a non-volatile memory of the replacement recommended part itself,
said generating means generating the error log by recording first generation information in the representative log information part and the detailed log information part in a non-overwritable manner with respect to a first failure of the replacement recommended part, and by recording second generation information in the representative log information part and the detailed log information part in an overwritable manner with respect to second and subsequent failures of the replacement recommended part.

10. The failure information management apparatus as claimed in claim 9, wherein
said device environment information includes time information indicating a power supply time for which power is supplied to the replacement recommended part; and
said generating means generates the error log by recording the time information at a time when the first generation information is recorded in a non-overwritable manner with respect to the first failure, and by successively recording the time information up to a time when the replacement recommended part is removed from the electronic apparatus in an overwritable manner with respect to the second and subsequent failures.

11. The failure information management apparatus as claimed in claim 9, wherein said storing means also stores the error log in a non-volatile memory of a specific part which is replaceable if the replacement recommended part is mounted on the specific part.

12. The failure information management apparatus as claimed in claim 9, wherein said device environment information includes, as part state information, a failure mark indicating that the replacement recommended part has failed.

13. The failure information management apparatus as claimed in claim 9, wherein the failure information management apparatus is provided in a part other than the replacement recommended part within the electronic apparatus.

14. A failure detection apparatus for detecting a failure of a replaceable part whose failure information is managed by the failure information management method of claim 5, comprising:
means for deleting the failure mark within the non-volatile memory of a first replacement recommended part when replacing a second replacement recommended part if the failure mark is recorded, as the part state information, in the non-volatile memory of each of the first and second replacement recommended parts; and
means for recording the failure mark again, as the part state information, in the non-volatile memory of the first replacement recommended part by detecting a failure of the first replacement recommended part if a failure is generated again after replacement of the second replacement recommended part.

15. The failure detection apparatus as claimed in claim 14, wherein the failure detection apparatus is provided in a part other than the replacement recommended part within the electronic apparatus.

16. An electronic apparatus comprising:
at least one of the failure information management apparatus as claimed in any of claims 9 to 13, and a failure detection apparatus as claimed in claim 14 or 15.

17. An information processing apparatus mounted with replaceable parts, **characterized in that** there are provided:
analyzing means for carrying out an analyzing process to analyze a failure generated in a part of the information processing apparatus;
generating means for generating an error log including information identifying a replacement target part, information indicating a type of failure generated in the replacement target part, and information related to an operation environment of the replacement target part, based on the analyzing process of the analyzing means;
storing means for storing the error log; and
means for writing a first generation error log generated for a first failure of the replacement target part in a non-overwritable manner in the storing means, and for storing a second generation error log generated for second and subsequent failures of the replacement target part in an overwritable manner in the storing means.

18. A failure information management method for managing failure information related to a failure generated in a part of an electronic apparatus, **characterized in that** there are provided:
a step generating an error log including information identifying a replacement target part, information indicating a type of failure generated in the replacement target part, and information related to an operation environment of the replacement target part, based on an analyzing process which analyzes a failure generated in the replacement target part; and
writing a first generation error log related to a first failure of the replacement target part in a non-overwritable manner in a storage part, and storing a second generation error log related to second and subsequent failures of the replacement target part in an overwritable manner in the storage part.
